# DEMANDE DE BREVET EUROPEEN

(11) **EP 0 978 233 A2**
(43) Date de publication de la demande: **09.02.2000**
(21) Numéro de dépôt: 99810370.9
(22) Date de dépôt: 03.05.1999
(51) Int. Cl.: A01G 9/02

(54) **Pot à fleurs**

(30) Priorité: 07.08.1998 CH 164798
(71) Demandeur: Schneider, Sophie, 1815 Clarens (CH)
(72) Inventeur: Schneider, Sophie, 1815 Clarens (CH)
(74) Mandataire: Ganguillet, Cyril

(57) **Abrégé**

Le pot à fleurs en terre cuite comporte des parois latérales (2) repliées (3) à l'intérieur du pot sur tout ou partie du pourtour du pot, de façon à constituer un espace latéral (4) d'aération sur au moins une partie de la hauteur du pot et comporte un trou d'aération (9) réalisé à la partie supérieure de la partie repliée (3) de la paroi latérale. Il contient une couche poreuse (7) dans sa partie inférieure, cette couche étant destinée à être recouverte de terre qui remplit la partie intérieure (8) du pot. Une lumière (12) est agencée à la partie supérieure de la partie repliée (3) de la paroi latérale du pot, de façon à pouvoir y introduire un testeur et à faufiler ledit testeur à l'intérieur de la double paroi constituée par la paroi latérale (2) et sa partie repliée (3).

## Description

La présente invention concerne un pot à fleurs en terre cuite.

Les pots à fleurs en terre cuite conventionnels comportent un trou dans leur fond destiné à laisser s'écouler le surplus d'eau lorsqu'on arrose la terre dont ils sont remplis et éviter notamment la pourriture des racines en constituant une aération. Il est nécessaire de placer ces pots sur des soucoupes, destinées à recueillir l'eau qui pourrait s'échapper du pot. De plus, l'aspect brut, après une certaine durée de vie du pot, n'est plus du plus bel effet à cause des auréoles qui se dessinent à la surface extérieure du pot puisque la terre cuite n'est pas imperméable. Il est donc généralement nécessaire d'entourer ces pots d'un cache-pot.

On a cherché à réaliser des pots à fleurs étanches, sans trou et ne nécessitant plus de cache-pot, le pot ayant à la fois son rôle de pot habituel et celui de cache-pot.

Il a déjà été proposé des pots à fleurs étanches. Par exemple le brevet US-A-4,346,532 décrit un pot à fleurs à double paroi agencé de façon à constituer une chambre centrale reliée à l'intérieur du pot par une série de trous d'aération. Ce pot est d'une conception complexe et doit être réalisé en plusieurs parties. Du fait de sa complexité, ce type de pot est destiné à être réalisé de préférence en matière plastique.

Un autre type de pot à double paroi est décrit dans le document GB-A-2,233,201. La double paroi du pot décrit dans ce second document se prolonge dans le fond du pot, de façon à constituer un réservoir entre les deux parois, ce réservoir étant destiné à être rempli d'eau pour constituer une alimentation automatique pendant plusieurs jours, voire plusieurs semaines. Du fait de la présence d'eau dans le réservoir latéral, la terre se trouvant au fond du pot est gorgée d'eau, ce qui entraîne inévitablement la pourriture des racines. De plus, dans ce cas aussi, le pot doit être réalisé en plusieurs parties.

Le but de la présente invention est de proposer un pot à fleurs en terre cuite qui permette de remédier aux problèmes mentionnés ci-dessus, tout en étant de conception simple, le pot lui-même pouvant servir d'élément décoratif.

A cet effet, l'invention concerne un pot à fleurs en terre cuite, tel que défini à la revendication 1. Des modes d'exécution du pot à fleurs selon l'invention sont définis dans les revendications subordonnées à la revendication 1.

La description qui suit, donnée à titre d'exemple, se réfère au dessin sur lequel :
la figure 1 est une vue schématique en coupe verticale d'un premier exemple de pot à fleurs selon l'invention,
la figure 2 est une vue schématique en coupe verticale d'un deuxième exemple de pot à fleurs selon l'invention, et
la figure 3 est une vue schématique en coupe verticale d'un troisième exemple de pot à fleurs selon l'invention.

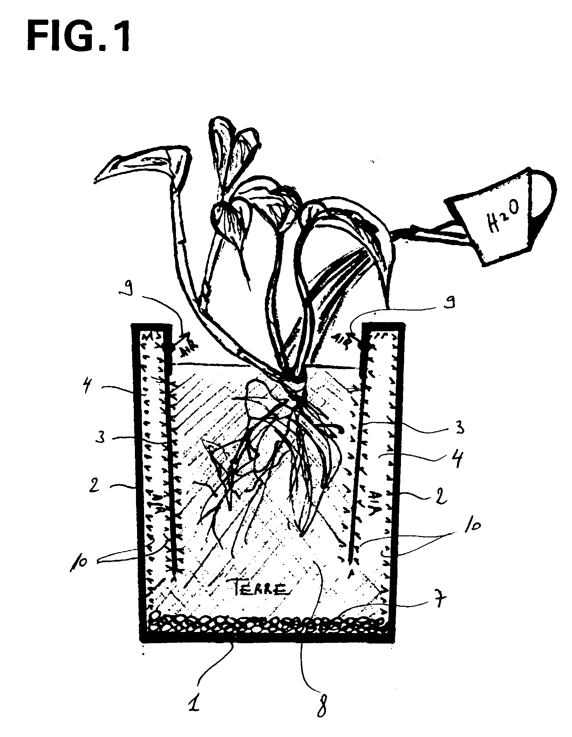

Les pots à fleurs représentés aux figures 1 à 3 sont réalisés en terre cuite. Ils comportent un fond 1 sans trou et des parois latérales 2 repliées 3 à l'intérieur du pot sur tout le pourtour du pot, de façon à constituer un espace latéral 4 sur au moins la moitié de la hauteur du pot, par exemple sur les quatre cinquièmes de la hauteur du pot, la longueur maximum de la partie repliée 3 étant dictée par des impératifs de démoulage.

La surface extérieure 5 de la partie inférieure de la paroi extérieure et la surface extérieure 6 du fond du pot peuvent être émaillées de façon à rendre le fond du pot imperméable. Le pot peut contenir une couche poreuse 7 dans sa partie inférieure, réalisée par exemple par des cailloux d'argile, cette couche étant recouverte de terre qui remplit la partie intérieure 8 du pot. L'espace latéral 4 entre la partie extérieure 2 de la paroi latérale et sa partie repliée 3 n'est pas rempli de terre mais seulement d'air. Cet espace n'est pas destiné à constituer un réservoir d'eau, mais sert à l'aération, un ou plusieurs trous d'aération 9 étant prévu(s) dans la partie supérieure du pot.

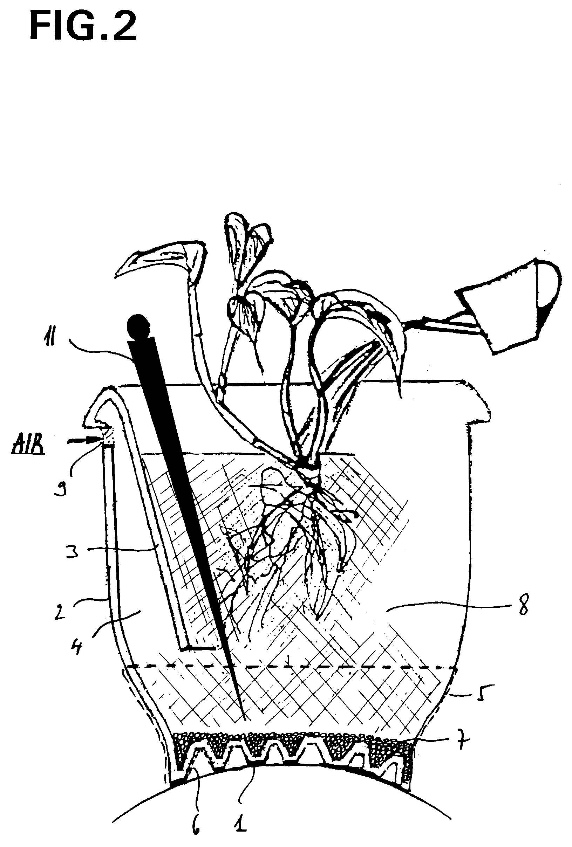

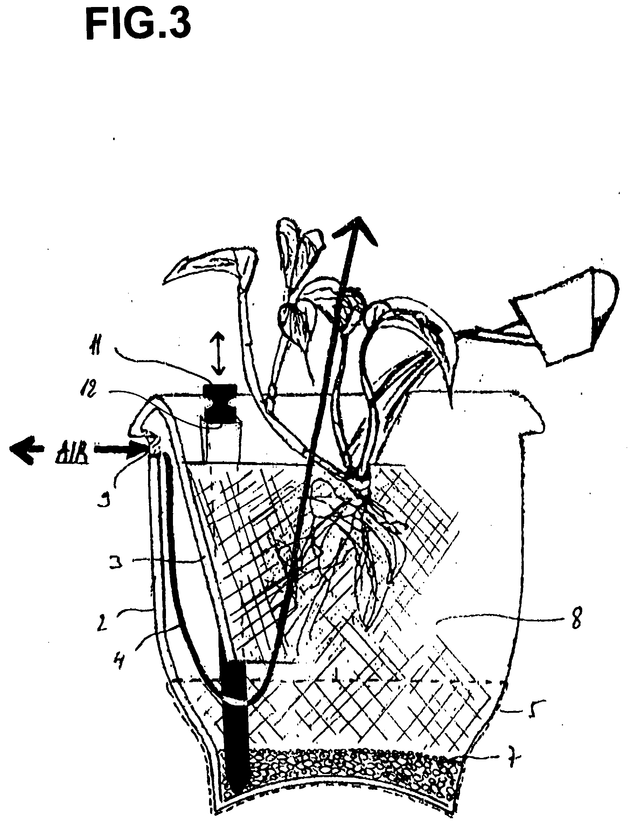

Dans le pot représenté à la figure 1, le ou les trous 9 sont pratiqués dans la partie supérieure de la partie repliée 3 de la paroi latérale. Dans l'exemple représenté aux figures 2 et 3, le ou les trous 9 sont pratiqués à la partie supérieure de la paroi latérale extérieure 2, cette variante permettant d'une part un échange plus direct avec l'air extérieur et facilitant d'autre part le démoulage.

L'arrosage de la plante se fait de façon conventionnelle, comme représenté sur les figures, par la surface supérieure de la terre, le surplus d'eau éventuel venant se loger dans la couche inférieure poreuse 7. L'humidité excédentaire s'échappe dans l'espace 4 puis par les trous 9. Les racines ne pourrissent donc pas. De plus, des essais ont montré qu'une partie de l'humidité 10 est absorbée par les parois latérales 2 et 3 et par le fond du pot, cette humidité étant peu à peu restituée à la terre, l'espace entre la paroi latérale extérieure et sa partie repliée constituant un lieu de rencontre entre l'humidité et la prise d'air extérieur et permettant une redistribution naturelle de l'humidité selon les besoins de la plante. Il en résulte que l'humidité de la terre reste constante plus longtemps que dans les pots traditionnels. De ce fait, l'arrosage peut être espacé de quelques jours.

Selon le mode de réalisation représenté aux figures 2 et 3, le fond du pot présente une forme légèrement courbée vers le haut, avec éventuellement des créneaux comme à la figure 2. Cette configuration en courbe permet d'éviter que de l'eau ne stagne au centre du pot, en l'obligeant à circuler vers les bords du pot. La configuration en créneaux de la figure 2 permet en outre d'augmenter la surface du fond et surtout la quantité de matière du fond du pot, ce qui augmente les capacités d'absorption d'humidité du fond du pot, sans augmenter l'épaisseur du fond du pot.

Comme représenté aux figures 2 et 3, un testeur d'humidité 11, qui peut être réalisé en argile, ou en toute autre matière absorbante d'humidité, est prévu pour tester l'humidité de la terre contenue dans le pot et déterminer si un apport d'eau est nécessaire.

Selon le mode d'exécution représenté à la figure 2, le testeur est agencé pour être enfoncé dans la terre du pot par la surface supérieure de la terre.

Selon le mode d'exécution représenté à la figure 3, une lumière 12 est prévue à la partie supérieure de la partie repliée 3 de la paroi latérale du pot, de façon à y introduire le testeur et à la faufiler à l'intérieur de la double paroi constituée par la paroi latérale 2 et sa partie repliée 3.

Selon une variante non représentée au dessin, le pot ne comporte aucune partie émaillée. Il peut alors être accompagné d'une soucoupe comportant un revêtement émaillé et servant à l'isoler de la surface sur laquelle il repose, de façon à éviter de tacher ladite surface.

Le pot à fleurs selon l'invention peut être réalisé par moulage, selon une technique en soi connue, utilisant un moule du type "puzzle", constitué de plusieurs parties à cause du démoulage. Une pâte composée de 60% d'argile et de 40% de roches naturelles est particulièrement adaptée pour un démoulage facile. De plus une telle pâte permet d'obtenir des pots présentant de bonnes caractéristiques de porosité, une bonne adhérence de l'émail de protection et un produit solide.

Du fait de la simplicité de sa conception, le pot à fleurs selon l'invention permet la réalisation de pots de formes diverses, constituant en eux-mêmes des éléments décoratifs, tout en conservant leur fonction de pots à fleurs. L'utilisation d'un cache-pot n'est plus nécessaire.

## Revendications

1. Pot à fleurs en terre cuite, caractérisé en ce qu'il comporte des parois latérales (2) repliées (3) à l'intérieur du pot sur tout ou partie du pourtour du pot, de façon à constituer un espace latéral (4) d'aération sur au moins une partie de la hauteur du pot, au moins un trou d'aération (9) étant prévu dans la paroi à la partie supérieure du dit espace ainsi créé.

2. Pot à fleurs selon la revendication 1, caractérisé en ce que le trou d'aération (9) est réalisé à la partie supérieure de la partie repliée (3) de la paroi latérale.

3. Pot à fleurs selon la revendication 1, caractérisé en ce que le trou d'aération (9) est réalisé à la partie supérieure de la paroi latérale extérieure.

4. Pot à fleurs selon l'une des revendications précédentes, caractérisé en ce que qu'il contient une couche poreuse (7) dans sa partie inférieure, cette couche étant destinée à être recouverte de terre qui remplit la partie intérieure (8) du pot.

5. Pot à fleurs selon la revendication 4, caractérisé en ce que la couche poreuse est réalisée par des cailloux d'argile.

6. Pot à fleurs selon l'une des revendications précédentes, caractérisé en ce que le fond du pot est de forme concave.

7. Pot à fleurs selon l'une des revendications précédentes, la surface extérieure (5) de la partie inférieure de la paroi extérieure (2) et la surface extérieure (6) du fond du pot sont émaillées de façon à rendre le fond du pot imperméable.

8. Pot à fleurs selon l'une des revendications précédentes, caractérisé en ce qu'il comporte une lumière (12) à la partie supérieure de la partie repliée (3) de la paroi latérale du pot, agencée de façon à pouvoir y introduire un testeur et à faufiler ledit testeur à l'intérieur de la double paroi constituée par la paroi latérale (2) et sa partie repliée (3).
